# EUROPEAN PATENT SPECIFICATION

(11) **EP 3 219 468 B1**
(45) Date of publication and mention of the grant of the patent: **02.09.2020**
(21) Application number: 15859140.4
(22) Date of filing: 06.11.2015
(51) Int. Cl.: B29C 33/38, B33Y 10/00, B33Y 50/02, B22F 3/105, B22F 3/16, B33Y 80/00, B22F 5/00, G05B 19/4097, G05B 19/4099

(54) **THREE-DIMENSIONAL OBJECT MANUFACTURING METHOD AND THREE-DIMENSIONAL OBJECT**
VERFAHREN ZUR HERSTELLUNG EINES DREIDIMENSIONALEN OBJEKTS UND DREIDIMENSIONALES OBJEKT
PROCÉDÉ DE FABRICATION D'OBJET TRIDIMENSIONNEL ET OBJET TRIDIMENSIONNEL

(30) Priority: 10.11.2014 JP 2014227955
(43) Date of publication of application: 20.09.2017
(73) Proprietor: Bridgestone Corporation, Tokyo 104-8340 (JP)
(72) Inventor: KANAI, Ken, Tokyo 104-8340 (JP)
(74) Representative: Oxley, Robin John George
(86) International application number: PCT/JP2015/081265
(87) International publication number: WO 2016/076211

(56) References cited:
- EP-A1- 1 077 125
- EP-A1- 1 557 250
- WO-A1-2010/098479
- JP-A- 2004 142 427
- JP-A- 2004 142 427
- JP-A- 2008 280 582
- JP-A- 2009 001 916
- JP-A- 2012 101 443
- JP-A- 2013 043 409
- US-A1- 2011 045 120
- US-A1- 2011 162 506

## Description

### TECHNICAL FIELD

The present invention relates to a method for manufacturing a three-dimensional object and a three-dimensional object, and more particularly to a method for manufacturing a mold by a layered manufacturing process capable of imparting physical properties required for specific regions of the manufactured mold.

### BACKGROUND ART

Known conventionally in the art as a method for manufacturing a tire curing mold, which is an example of a mold, is one using a layered manufacturing process as disclosed in Patent Document 1. In the layered manufacturing process, a three-dimensional mold shape designed by CAD is divided into layer shapes sliced into equal thicknesses, which are then converted into a plurality of partial shape data (hereinafter referred to as slice data). Then metallic powder deposited in correspondence to a thickness of the partial shape is irradiated by a laser based on the slice data. And layers of the metallic powder sintered by laser irradiation are stacked one by one to form a three-dimensional mold. The tire curing mold is required to have varying physical properties, such as strength and thermal conductivity, for different regions thereof. Accordingly, Patent Document 1 discloses a method of manufacturing a tire curing mold having physical properties suited to the different regions thereof by creating differences in density in sintered layers by changing a plurality of laser irradiation conditions, such as strength, irradiation time, and scanning speed, of a laser beam irradiated to the metallic power for the respective regions of the mold.

Also, in Patent Document 2, a method for manufacturing a three-dimensionally shaped object having higher-density regions and lower-density regions therein is disclosed. In order to obtain physical properties, such as strength, required for each element of a three-dimensional object in the manufacturing of the three-dimensional object by a 3D manufacturing process, the three-dimensionally shaped object is divided into elements in need of different physical properties from each other, and the light beam irradiation conditions, which cause changes in the scanning speed, scanning pitch, and focusing diameter, of the light beam irradiated to the powder are set differently for the respective elements.

Attention is also drawn to the disclosures of US2011/162506, EP1557250 and EP1077125.

### RELATED ART DOCUMENT

### Patent Document

Patent Document 1: Japanese Unexamined Patent Application Publication (Translation of PCT Application) No. WO2004/048062
Patent Document 2: Japanese Unexamined Patent Application Publication (Translation of PCT Application) No. WO2010/098479

### SUMMARY OF THE INVENTION

### Problem to be Solved by the Invention

The method disclosed in Patent Document 1 changes a plurality of laser irradiation conditions, such as strength, irradiation time, and scanning speed of laser, according to the regions of the object. And the method disclosed in Patent Document 2 sets light beam irradiation conditions of scanning speed, scanning pitch, focusing diameter, and the like changed according to elements. However, these conventional manufacturing methods have a problem in that the three-dimensional object cannot be manufactured integrally because of the density differences in the sintered layers therein or gaps occurring between the parts in higher-density regions and lower-density regions. Also, they have a problem of very weak boundary portions which do not provide adequate strength necessary for the jointing between the parts.

Thus, to solve the above-mentioned problems, the present invention aims to provide a simple method for manufacturing a mold capable of manufacturing it integrally without causing density differences in the sintered layers therein or gaps occurring between the parts in higher-density regions and lower-density regions. At the same time, the invention provides a method for manufacturing a mold capable of setting physical properties, such as strength and thermal conductivity, necessary for the different regions of the mold assuring the jointing between the parts

### Means for Solving the Problem

As a method for manufacturing a tire curing mold to solve the above-described problems, a first aspect of the present invention provides a method for manufacturing a tire curing mold as claimed in claim 1. Therefore, in the portion where a predetermined amount of overlap is set, the powder is sintered by twice of light irradiation. As a result, this simple method of setting a predetermined amount of overlap can realize an integral manufacture of a three-dimensional object without allowing gaps to occur between one part and the other part and obtain a strength required for joining one part with the other part. That is, it becomes possible to set physical properties, such as strength and thermal conductivity, necessary for the different regions of the three-dimensional object. The light to be used for the sintering the above-mentioned powder includes not only the ordinary laser light but also the LED light using an optical semiconductor of a semiconductor laser.

A second aspect of the present invention provides a tire curing mold manufactured by a layered manufacturing process as claimed in claim 4.

### BRIEF DESCRIPTION OF THE DRAWINGS

FIG. 1 is a cross-sectional view showing a curing apparatus.
FIG. 2 is a configuration diagram of a mold manufacturing apparatus.
FIG. 3A is an illustration showing a mold model.
FIG. 3B is an illustration showing a cross section taken along A-A of the mold model of FIG. 3A.
FIG. 4 is an illustration showing laser irradiation conditions and layer stacking condition.
FIG. 5A is a partial enlargement of the encircled portion in the cross section taken along A-A of the mold model of FIG. 3B.
FIG. 5B is a model diagram of tread part data and sipe part data shown in FIG. 5A converted into manufacturing data before the correction of part data.
FIG. 5C is a diagram showing a method for correcting part data, showing an overlap portion between tread part data and sipe part data shown in FIG. 5A.
FIG. 6 is a schematic illustration showing a layered manufacturing apparatus.
FIG. 7 is a process chart of manufacturing a mold.
FIG. 8 is an operation diagram of the layered manufacturingapparatus.
FIG. 9 is an illustration showing another embodiment of a method for correcting part data.

### MODE FOR CARRYING OUT THE INVENTION

Hereinafter, the invention will be described in detail based on embodiments which do not intend to limit the scope of the claims of the present invention but exemplify the invention. And all of the combinations of the features described in the embodiments are not necessarily essential to the solutions of the invention.

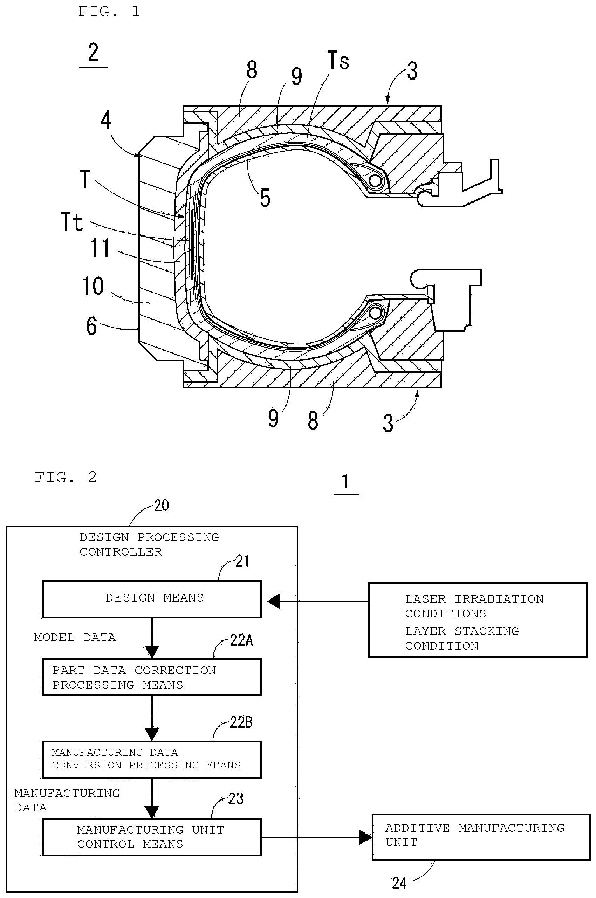

FIG. 1 is a half cross-sectional view schematically showing the main parts of a curing apparatus 2. The mold manufactured using a mold manufacturing apparatus 1 of the present embodiment is placed inside the curing apparatus 2 as shown in FIG. 1, for instance. The curing apparatus 2 includes a pair of side molds 3, 3 for molding sidewall regions Ts of the exterior surfaces of a tire T, a tread mold 4 for molding a tread region Tt, and a bladder 5 for molding the interior surface of the tire. The side molds 3, 3, which are disposed vertically opposite to each other, are each formed approximately in a disk shape along the circumference of the sidewall region Ts of the tire T. The tread mold 4, which is disposed between the upper and lower side molds 3, 3, is configured by a plurality of sector molds 6 arranged annularly along the circumference of the tire T. The side molds 3, 3 include each of a base board 8 and a sidewall die 9. The base board 8 is an attachment for fitting and securing the sidewall die 9. The sidewall die 9 has a predetermined molding pattern formed thereon for molding the surface of the sidewall region Ts of the uncured tire T. The sector mold 6 includes a sector segment 10 and a tread die 11. The sector segment 10 is an attachment for fitting and securing the divided pieces of a plurality of divided tread dies 11. The tread die 11 has a molding pattern formed thereon for a predetermined molding of the tread region Tt of the uncured tire T.

The sidewall die 9 is so configured as to be movable vertically together with the base board 8. The tread die 11 is so configured as to be movable radially together with the sector segment 10. A molding space, which enwrap the whole area of the uncured tire T, is formed as the sidewall dies 9, 9 and the plurality of tread dies 11 are brought closer together. After the uncured tire T is placed within the molding space, the bladder 5 placed inside the tire T is inflated. With the inflation of the bladder 5, the tire T is pressed from inside against the sidewall dies 9, 9 and the tread dies 11, and the molding patterns formed on the sidewall dies 9, 9 and the tread dies 11 are transferred to the exterior surface of the tire T. Following the transfer of the molding patterns, the tire T is cure-molded by heating at predetermined temperatures. It is to be noted that, on completion of the cure-molding, the mold is opened with the sidewall dies 9, 9 and the tread dies 11 moved apart from each other, and the tire T after the cure-molding is taken out.

Hereinbelow, a description is given of a method of manufacturing the sidewall die 9 and the tread die 11 for molding the exterior surface of the tire T as an example of a mold. Note that, for the convenience of explanation, the following description uses the tread die 11 as an example.

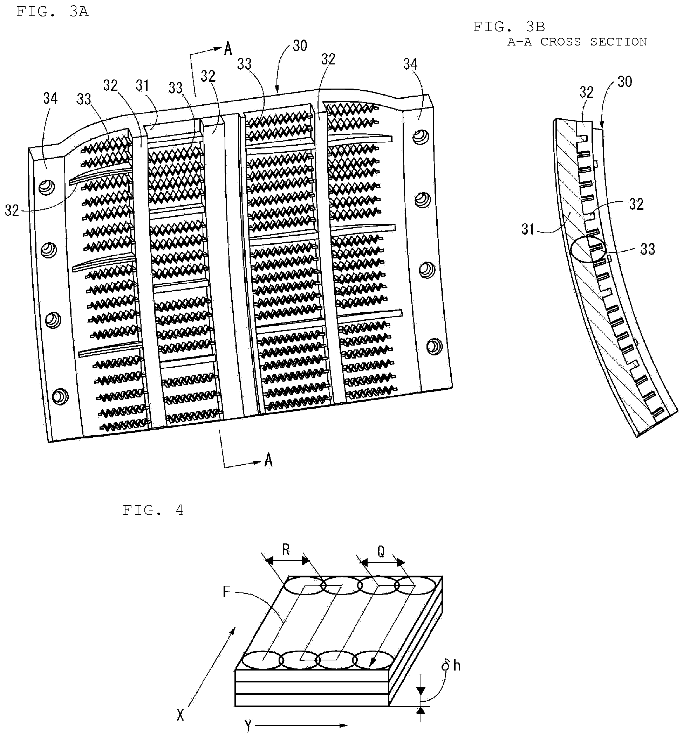

FIG. 2 is a configuration diagram showing an embodiment of a mold manufacturing apparatus 1. FIGS. 3A and 3B show an example of a mold model 30 of a tread die 11 designed by a design processing controller 20. The mold manufacturing apparatus 1 as shown in FIG. 2 is a three-dimensional object manufacturing equipment capable of manufacturing a three-dimensional object. It is suitable for the manufacturing of a mold, especially a tire curing mold as in the present embodiment. As shown in FIG. 2, the mold manufacturing apparatus 1 includes a design processing controller 20 and a layered manufacturing unit 24. The design processing controller 20, which is a so-called computer, is comprised of a CPU as an arithmetic processing means, a ROM and a RAM as storage means, I/O interfaces connected with input units, such as a keyboard and mouse, and a display unit, such as a monitor, and a communication means enabling communication with the layered manufacturing unit 24. The design processing controller 20 includes a program that has the CPU function as a design means 21, a part data correction processing means 22A, a manufacturing data conversion processing means 22B, and a manufacturing unit control means 23. Also, the design processing controller 20 receives the input of laser irradiation conditions and layer stacking condition which are required in the processing to be discussed later.

FIG. 4 is a conceptual diagram showing the irradiation operation of a laser La in the layered manufacturing unit 24 to be discussed later. As shown in the figure, the laser irradiation conditions are the irradiation pitch Q, irradiation diameter R and laser strength, and scanning pattern F, etc. that are required for controlling laser irradiation of the layered manufacturing unit 24. The irradiation pitch Q, irradiation diameter R, laser strength and scanning pattern F are, for instance, set individually to impart physical properties required for each of mold parts. The irradiation pitch Q is so set that a predetermined value of overlap results in the adjacent laser irradiated portions along the X-axis and the Y-axis in the figure. These X-axis and Y-axis are set in advance on the worktable 43 of the layered manufacturing unit 24 to be discussed later. Also, the layer stacking condition is the thickness of deposition of metallic powder S, or the layer thickness δh. The layer thickness δh is set at 0.1 to 0.2 µm, for instance. At the design processing controller 20, the processing is performed based on these conditions.

The design means 21 is a so-called CAD that executes design processing of a mold. The design means 21 generates a mold model 30 of a tread die 11 as shown in FIG. 3A. The mold model 30 represents a three-dimensional shape of a plurality of parts (mold elements), such as tread part 31, groove part 32, sipe part 33, and attachment part 34 of the tread die 11, for instance, which is stored as model data in the storage means.

Note here that the tread part 31, groove part 32, sipe part 33, and attachment part 34 are required to have different physical properties from each other. The physical properties meant here are strength, thermal conductivity, and performance. For example, the tread part 31, groove part 32, and sipe part 33 are required to show high thermal conductivity so that uniform heat conduction occurs during the cure-molding of the tire. The tread part 31, in particular, should preferably be made to have low density and light weight as long as thermal conductivity is assured. Also, the sipe part 33, which is thin, must have sufficient strength such that it does not deform during molding and does not break when the tire is stripped from the mold after molding. And the attachment part 34 needs to have strength that does not allow cracking when the tread die is secured by securing means, such as bolts, to the above-mentioned sector segment 10. Also, strength is a necessary factor in the jointing of the parts 31, 32, 33, and 34 together. For example, it is possible to increase the strength and density by increasing the amount of heating of the metallic powder S by a laser. By doing so, however, distortion due to heating may also increase. And elimination of the distortion due to heating during the manufacturing may require additional trouble of correction after the manufacture. Therefore, the heating must be performed at a requisite minimum.

As described above, the mold elements of the tread die 11 are in need of different physical properties from each other. In the present example, therefore, the mold model 30 generated as an integrated body by the design means 21 is divided into tread part data D1, groove part data D2, sipe part data D3, and attachment part data D4 respectively corresponding to the tread part 31, groove part 32, sipe part 33, and attachment part 34.

Division into data D1 to D4 is done by operating the input unit specifying the ranges of the tread part 31, groove part 32, sipe part 33, and attachment part 34 from the mold model 30 displayed on the monitor, using a CAD function, for instance. By this division processing, not only the three-dimensional part shape information but also the positional information for specifying the positional relationship of the mold parts to be joined together and the division surface information for specifying the division surfaces are generated for the tread part data D1, groove part data D2, sipe part data D3, and attachment part data D4, respectively. The division surface information, for instance, is configured by normal vectors indicating division surfaces. It is to be noted that the direction of the normal vectors is toward the parts to be joined together. The mold model 30 divided into the plurality of part data D1 to D4 by the division processing is subjected to a part data correction processing by the part data correction processing means 22A.

The part data correction processing means 22A corrects the part data of one of the adjoining mold parts such that the division surface set for the one of the adjoining mold parts cuts into mold parts of the other of the adjoining mold parts and joins with the other of the adjoining mold parts.

For example, there may be a procedure, as a method for gaining strength of the joint between the mold parts by the layered manufacturing unit 24 without correcting the sipe part data. That is, the irradiation pitch of a laser La, which is a laser irradiation condition at the layered manufacturing unit 24, is narrowed so that no discontinuity occurs on the division surfaces of the adjoining parts divided from the integrated model data. And further the layer thickness δh of the deposited layer 60 of the metallic powder S is thinned so that no gaps may occur in the division surfaces of the adjoining part data after conversion of the manufacturing data. Yet, this may present a problem of failure to achieve desired physical properties due to the overheating of the metallic powder S which is the base material. At the same time, a desired accuracy cannot be achieved as a whole because of the thermal strain during the cooling after sintering. To avoid these problems, the irradiation pitch and the layer thickness δh may be partially changed in the neighborhood of the division surfaces. In such cases, too, it may be possible that a desired shape cannot be retained because of partial strains that may occur after cooling in the regions where the irradiation pitch is narrowed and the layer thickness δh is made thinner. Hence, the part data of one of the adjoining mold parts is corrected by the part data correction processing means 22A so that the division surface set for the one mold part cuts into the other mold part and joins with the other mold part.

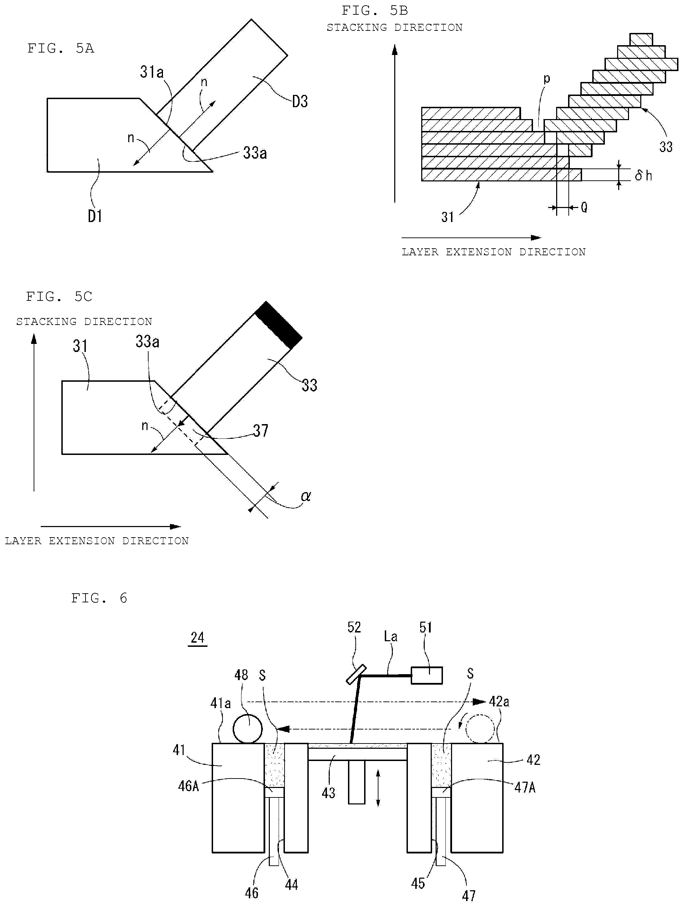

FIG. 5A is a partial enlargement of the encircled portion in a cross sectional view taken along line A-A of a mold model of FIG. 3B. Hereinbelow, a description is given of a part data correction processing by the part data correction processing means 22A, using the tread part data D1 of the tread part 31 for the molding of the tread and the sipe part data D3 of the sipe part 33 for the molding of the sipe as an example.

The part data correction processing means 22A corrects the position of the division surface 33a between the sipe part data D3 selected by the worker operating the input unit and the tread part data D1 adjoining the sipe part data D3. In this correction processing, the positional information is corrected such that the whole of the sipe part data D3 is shifted in the direction of the tread part data D1 along the normal vector n of the division surface 33a contained in the selected sipe part data D3. As the result, the sipe part data D3 is so corrected as to engage with (cut into) the tread part 31 side (tread part data D1 side). Here the shift amount α by which the sipe part data D3 is shifted is set as follows.

FIG. 5B is a model diagram when the tread part data D1 and the sipe part data D3 as shown in FIG. 5A are converted into manufacturing data before the correction of part data. As shown in FIG. 5A, the mold model 30 after the division is so represented that the division surfaces 33 of the tread part data D1 and the sipe part data D3 coincide with each other. And when the mold model 30 after the division is converted into manufacturing data readable by the layered manufacturing unit 24, the tread part data D1 and the sipe part data D3 are converted into sliced data as shown in FIG. 5B.

As shown in FIG. 5B, when the mold model 30 after the division is converted into manufacturing data, there results a gap p between the tread part data D1 and the sipe part data D3.

In the mold model 30, the division surfaces 33 of the tread part data D1 and the sipe part data D3 are processed as a common surface shared by the two. However, when the mold model 30 is converted into manufacturing data, the tread part data D1 and the sipe part data D3 are subjected to conversion processing separately. As a result, there occurs a gap 2 at the division surfaces 33 of the tread part data D1 and the sipe part data D, which have no longer association as a common surface shared by the two. In the conversion into the manufacturing data like this, the division surface 31a and the division surface 33a assume staircase patterns since they are approximated using the minimum units of layer thickness δh of metallic powder S and irradiation pitch Q of the laser La when the layered manufacturing unit 24 is operated. And the division surface 31a and the division surface 33a are converted into a state in which the tips thereof are in contact with each other. And the manufacturing of the mold by the layered manufacturing unit 24 in the state in which the tips are in contact with each other like this may bring about an inconvenience of the joint strength of the tread part 31 and the sipe part 33 after the manufacturing being not sufficient or there being no joint between them.

Accordingly, a shift amount α for correcting the position of sipe part data D3 is set in order to gain a proper joint strength of the tread part 31 and the sipe part 33 after the manufacturing. The maximum value of the gap p that may occur between the tread part data D1 and the sipe part data D3 is equal to the irradiation pitch Q in the layer extension direction and the layer thickness δh in the stacking direction. Therefore, to obtain a proper joint between the tread part 31 and the sipe part 33, an overlap 37 between the tread part data D1 and the sipe part data D3 is set as shown in FIG. 5C by shifting the sipe part data D3 along the normal vector of the division surface 33a by the dimension whichever is larger of a half of the irradiation diameter R and the layer thickness δh. That is, the shift amount α is also an overlap amount of the overlap 37 between the tread part data D1 and the sipe part data D3. By setting the shift amount α like this, part of the sipe part data D3 can be overlapped with the tread part data D1 by the least shift distance.

In the first and second aspects of the present invention, the value whichever is larger of the dimension of irradiation diameter R and twice the dimension of the layer thickness δh is set as the shift amount α. This will realize the overlap 37 of a wider range, thus achieving a higher joint strength.

As described above, the part data correction processing means 22A corrects the positional information contained in the sipe part data D3 such that the sipe part data D3, of the tread part data D1 and the sipe part data D3 having the adjoining division surfaces 31a and 33a, respectively, is shifted by the shift amount α toward the tread part data D1. Thus, the tread part 31 and the sipe part 33 after the manufacturing can be joined together. Also, though the detail will be discussed later, the overlap 37 will have physical properties different from those of the other regions by the operation of the layered manufacturing unit 24. The physical properties thus gained differ from those of both the parts of the tread part data D1 other than the overlap 37 and the parts of the sipe part data D3 other than the overlap 37.

In this manner, at least one of the adjoining part data is corrected in advance so as to obtain an overlap 37 of the parts to be joined together before the mold model 30 after the division is converted into the manufacturing data. As a result, the mold parts to be joined together can be joined with a proper joint strength without any particular processing carried out in the subsequent process. The above description has been given of the case where the sipe part data D3, which is one of the tread part data D1 and the sipe part data D3 to be joined together, is corrected. However, the arrangement may be such that the positions of both the division surfaces 31a and 33a of the parts to be joined together are so corrected that they engage with, or cut into, each other to form the overlap 37.

The manufacturing data conversion processing means 22B converts the mold model 30 corrected by the part data correction processing means 22A into manufacturing data. The manufacturing data is the three-dimensional mold model 30 converted into a plurality of slice data which are layers sliced at a predetermined thickness.

More specifically, the manufacturing data conversion processing means 22B converts the part data D1 to D4 into a plurality of slice data, respectively, by specifying the slicing direction and the slicing thickness to the coordinate system set when the three-dimensional mold model 30 is generated by the design means 21. The manufacturing data after the conversion is outputted to the manufacturing unit control means 23.

The manufacturing unit control means 23 controls the layered manufacturing unit 24 based on the manufacturing data outputted from the manufacturing data conversion processing means 22B and the laser irradiation conditions and layer stacking condition inputted by the operation of the worker. It is to be noted that the laser irradiation conditions can be set individually for the part data D1 and D3. The following description, however, is given on the assumption that the laser strength, the scanning speed and direction of laser light, and the laser irradiation diameter R are constant.

FIG. 6 is an illustration showing an example of a layered manufacturing unit 24. The layered manufacturing unit 24 includes a pair of left and right stages 41 and 42 disposed a predetermined distance apart from each other and a worktable 43 disposed movable up and down between the left and right stages 41 and 42. The left and right stages 41 and 42 are set such that their upper surfaces are positioned in the same plane of height. The left and right stages 41 and 42 have cylinders 44 and 45, respectively, which extend vertically. The cylinders 44 and 45 open in the upper surfaces 41a and 42a, respectively, of the stages 41 and 42. Disposed inside the cylinders 44 and 45 are feeders 46 and 47, respectively, which have pistons 46A and 47A, respectively, slidable along the inner surfaces of the cylinders 44 and 45. The feeders 46 and 47 move up and down along the axial direction of the cylinders 44 and 45 by the operation of a not-shown drive mechanism that operates according to the signals outputted from the manufacturing unit control means 23. Filled up to the upper surfaces of the stages 41 and 42 on the pistons 46A and 47A is the metallic powder S, which is the material for the manufacture of the mold.

Disposed on the upper surfaces 41a and 42a of the stages 41 and 42 is a roller 48 which moves along the upper surfaces 41a and 42a. The roller 48, driven by a not-shown drive mechanism, moves between the left and right stages 41 and 42 with the periphery thereof rolling in contact with the upper surfaces 41a and 42a of the left and right stages 41 and 42. Disposed above the worktable 43 are a laser gun 51 for irradiating laser light La and an irradiation mirror 52 for directing the laser light emitted by the laser gun 51 toward the metallic powder S. The irradiation mirror 52 forms a sintered layer by sintering the metallic powder S deposited on the upper surface of the worktable 43, based on the control signals outputted from the manufacturing unit control means 23. The irradiation mirror 52, driven by a not-shown drive means, sequentially sinters the metallic powder S deposited on the upper surface of the worktable 43 by moving in the scanning directions, which are the coordinate axes X and Y set on the worktable as shown in FIG. 4, based on the slice data. After a sintered layer corresponding to a first slice data is formed, the sintering based on the slice data set above the first slice data is started. Then the sintered layers corresponding to the slice data sequentially above are formed layer upon layer. In this manner, a mold corresponding to the shape of the mold model 30 is manufactured.

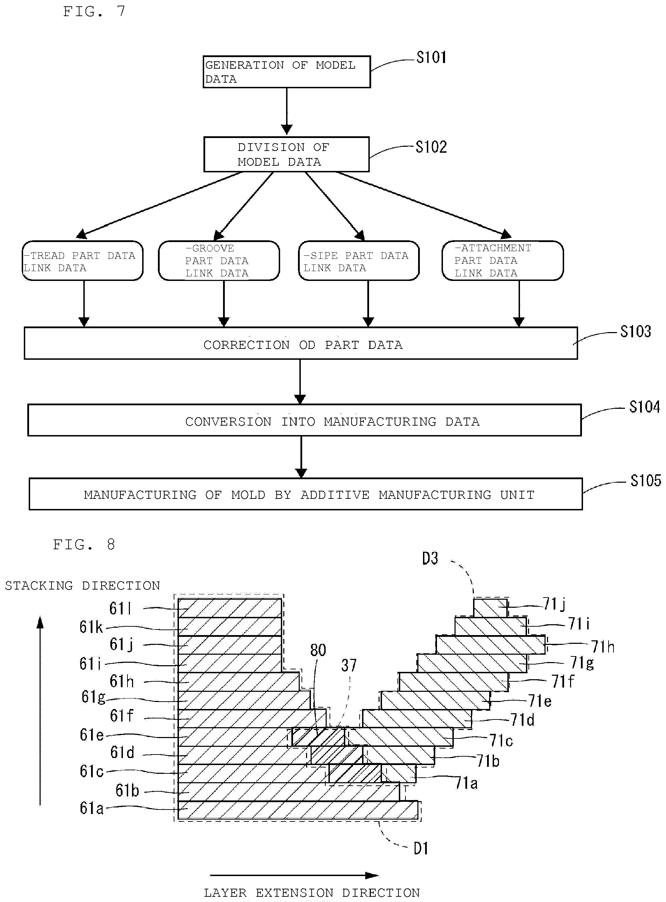

FIG. 7 is a process chart showing the steps of manufacturing a mold.

### [Step 101]

First, the design means 21 generates a three-dimensional mold model 30 of the mold to be manufactured.

### [Step 102]

Next, the mold model 30 is divided into regions (mold elements) which are required to have different physical properties from each other for the mold. In the present embodiment, the part data D1 to D4 are generated by division from the above-mentioned mold model 30.

### [Step 103]

Next, the part data correction processing means 22A corrects the position of the division surface of one of the divided part data to be adjoined together so that it engages with the other of the part data, thus setting a predetermined amount of overlap. It is to be noted that, in the above-mentioned part data correction processing, a description has been given of an example of the sipe part data D3 adjoining the tread data D1. However, correction is done in a similar manner on the groove part data D2 adjoining the tread data D1.

### [Step 104]

Next, the mold model 30 after the correction processing is converted into manufacturing data. That is, the mold model 30 is converted into a plurality of slice data, which are in layers.

### [Step 105]

Next, the mold is manufactured based on the manufacturing data.

FIG. 8 is a partial enlargement showing a part of the tread die 11 manufactured by the layered manufacturing unit 24. It is to be noted that the overlap 37 in the figure is depicted in an exaggerated manner.

The layered manufacturing unit 24 operates based on the manufacturing data outputted from the manufacturing unit control means. The layered manufacturing unit 24 stacks sintered layers sequentially by lowering the worktable 43 each time a sintered layer sintered into the shape of one slice data is formed from the lower layer side of the manufacturing data, depositing the metallic powder S of the layer pitch on the previously formed sintered layer, and irradiating laser light again.

Hereinbelow, a description is given, with reference to FIG. 8, of the manufacturing of a mold by a layered manufacturing unit 24, using the layered manufacturing of the tread part 31 and sipe part 33 to be adjoined together. It is to be noted that the reference numerals 61a to 61j shown in the figure refer to the sintered layers of the tread part 31 stacked based on the tread part data D1 after the conversion into the manufacturing data and the reference numerals 71a to 71j refer to the sintered layers of the sipe part 33 stacked based on the sipe part data D3 after the conversion into the manufacturing data. As shown in the figure, the sintered layers 61a and 61b of the tread part are sintered based on the tread part data D1 only. On the other hand, the sintered layers 61c to 61e, which are the layers above the sintered layer 61b, are sintered based on the slice data of the tread part data D1 and sipe part data D3 because the sipe part data D3 must engage with the tread part data D1.

More specifically, after the sintered layer 61c is formed by laser irradiation based on the slice data of the tread part data D1, the sintered layer 71a of the sipe part is formed based on the slice data of the sipe part data D3. In a similar manner, the sintered layer 61d and the sintered layer 71b and the sintered layer 61e and the sintered layer 71c are formed sequentially. Thus formed is the joint portion of the tread part and the sipe part. The sintered portion 80 sintered as the overlap 37 of the tread part data D1 and the sipe part data D3 is subjected to twice of laser irradiation, namely, the laser irradiation based on the tread part data D1 and the laser irradiation based on the sipe part data D3. Hence, its sintered density becomes higher than the sintered density of the parts other than the overlap 37 of the tread part data D1 and the sintered density of the parts other than the overlap 37 of the sipe part data D3. Thus its strength becomes greater than that of the parts other than the overlap 37. In other words, it is possible to obtain desired physical properties for the joint part by changing the physical properties of the part of the tread part 31 sintered as the overlap 37 from the physical properties of the tread part sintered as the part other than the overlap 37 of the tread part data D1 and the physical properties of the sipe part 33 sintered as the part other than the overlap 37 of the sipe part data D3. That is, the overlap 37 set between the adjoining parts gains the greatest strength. That is to say, the overlap 37, which is the boundary portion of adjoining elements constituting part of a mold as a three-dimensional object, may have physical properties different from any other physical properties. For example, as explained for the present embodiment, when the molding is done using a single type of metallic powder S, the physical properties of the boundary portion will assume the physical properties intermediate between those of the adjoining constituent elements or the combined physical properties. It is to be noted that the "intermediate physical properties" means a strength resulting from the combined physical properties of the parts of the adjoining constituent elements other than the overlap 37 or a thermal conductivity averaging the combined physical properties.

Further, the tread part 31 is formed when the sintered layers 61f to 611 are stacked sequentially on top of the sintered layer 61e. And the sipe part 33 is formed when the sintered layers 71d to 71j are stacked sequentially on top of the sintered layer 71c.

In this manner, the part data of mutually adjoining mold parts are corrected to produce an overlap with each other. As a result, desired physical properties required for the joint part can be obtained without changing the laser irradiation conditions, such as laser feed or irradiation strength, within the same layer. The above description has been given of an example of manufacturing in which the tread part 31 and the sipe part 33 are adjoined together. However, it is to be noted that the tread part 31 and the groove part 32 adjoined together can also be manufactured by sintering in a similar manner based on the tread data D1 and the groove part data D2.

It is to be noted that, in the present example, the same conditions are set for the laser irradiation conditions based on the tread part data D1 and the laser irradiation conditions based on the sipe part data D3. However, different conditions may be set for the laser irradiation conditions based on the tread part data D1 and the laser irradiation conditions based on the sipe part data D3 in order to provide desired performances to the tread part 31 and the sipe part 33, respectively. As mentioned above, the tread part 31 and sipe part 33 constituting the mold are required to have excellent thermal conductivity to realize uniform heat conduction during the cure-molding of the tire. And the sipe part 33, which is thin walled, is further required to have sufficient strength to avoid any deformation occurring during molding and to cause no damage when the tire is stripped from the mold after molding. Also, the joint part of adjoining parts is required to have a strength greater than that of each of the parts.

That is, the laser irradiation conditions to achieve physical properties with excellent thermal conductivity are set for the tread part data D1 for manufacturing the tread part 31. And the laser irradiation conditions different from those for the tread part data D1 to achieve not only excellent thermal conductivity but also predetermined strength are set for the sipe part data D3 for manufacturing the sipe part 33. By manufacturing the mold in this manner, desired physical properties can be imparted to the tread part 31 that is manufactured based on the data other than that of the overlap 37 of the tread part data D1 and the sipe part 33 that is manufactured based on the data other than that of the overlap 37 of the sipe part data D3. Also, the part of the tread part 31 sintered as the overlap 37 cutting into (engaged with) the tread part data D1 may be given a strength required for the joint portion with the sipe part 33.

Also, in a region where the tread part 31, the groove part 32, and the sipe part 33 adjoin each other, for instance, there may be cases of duplication between the overlap of tread part data D1 and groove part data D2, the overlap of groove part data D2 and sipe part data D3, and the overlap of sipe part data D3 and tread part data D1. In such a case, laser is irradiated three times in the region where there is a duplication of three overlaps, laser is irradiated twice at the overlap of tread part data D1 and groove part data D2, the overlap of groove part data D2 and sipe part data D3, and the overlap of sipe part data D3 and tread part data D1, and laser is irradiated once for the parts of tread part data D1, groove part data D2, and sipe part data D3 other than the overlap. That is, when the same laser irradiation conditions are set for the tread part data D1, groove part data D2, and sipe part data D3, three different physical properties can be imparted in the manufacturing of the three mold parts.

As described above, at least one of the part shape data of mutually adjoining mold parts is corrected, and one part shape data and the other part shape data are laid on each other by a predetermined amount of overlap. And laser light is irradiated to the metallic powder based on the part shape data of one mold part, and then to the metallic powder based on the part shape data of the other mold part. As a result, the sintering is done with twice of laser irradiation in the part set for a predetermined amount of overlap. Accordingly, the mold can be manufactured integrally without leaving gaps between one mold part and the other mold part. At the same time, a strength required to assure the jointing one mold part with the other mold part can be obtained.

In other words, in the present embodiment, in a part data correction process, positional information of at least one of mutually adjoining part data of the model data of the three-dimensional object is corrected, and the adjoining part data are laid on each other by a predetermined amount of overlap. As a result, the light for the sintering of the powder is cast twice, for instance, in the part set for the predetermined amount of overlap. Thus, despite the simplicity of setting a predetermined amount of overlap only, the mold can be manufactured integrally without leaving gaps between one mold part and the other mold part. At the same time, a strength necessary for the jointing one mold part with the other mold part can be gained. That is, it is possible to set physical properties, such as strength and thermal conductivity, required for the different regions of a three-dimensional object.

In the conventional method of manufacturing a three-dimensional object by sintering with light, a complex preprocessing of changing a plurality of laser irradiation conditions, such as strength, irradiation time, and scanning speed, of a laser to be irradiated to the metallic powder, as disclosed in Patent Document 1, is required to vary the physical properties, such as strength and thermal conductivity, for different regions of the three-dimensional object.

Also, as disclosed in Patent Document 2, the three-dimensionally shaped object is divided into elements in need of different physical properties from each other. And the light beam irradiation conditions, which cause changes in the scanning speed, scanning pitch, and focusing diameter, of the light beam irradiated to the powder are set differently for the respective elements in order to provide physical properties, such as strength and thermal conductivity, required for each of the elements of the three-dimensional object. However, this method has problems of gaps resulting between the adjoining elements (one part and the other part) of the divided elements or inability to integrally manufacture a three-dimensional object due to weak jointing of boundary surfaces.

On the other hand, the present invention employs a part data correction process in which positional information of at least one of mutually adjoining part data of the model data of a three-dimensional object is corrected and the adjoining part data are laid on each other by a predetermined amount of overlap. As a result, it becomes possible for the first time not only to manufacture a mold integrally without causing gaps between one and the other of adjoining parts but also obtain a strength necessary for the jointing of one and the other of adjoining parts.

The cited Patent Documents 1 and 2 do not at all describe the above-mentioned problems, the configurations and effects. That is, the problems are not addressed, and there are no solutions to resolve them. Without solving these problems, it is not possible to manufacture a mold integrally without causing gaps between one and the other of adjoining parts and obtain strength necessary for the jointing of one and the other of adjoining parts.

Therefore, the present embodiment does not require the complex processings of conventional methods. In such conventional methods, density differences in the sintered layers are created by changing the plurality of laser irradiation conditions, such as strength, irradiation time, and scanning speed, of laser light irradiated to the metallic powder; a mold is divided into a plurality of elements; light beam irradiation conditions, such as operation speed, scanning pitch, and focusing diameter, of the light beam irradiated to the metallic powder are set for different elements, respectively; or the higher density regions and lower density regions are set for the respective elements to vary the physical properties, such as strength, required for the elements constituting the mold. Thus, it is now possible to start the manufacture of a mold in a short time without spending much time before initiating the actual manufacture of the mold. And this raises the productivity of mold production by a layered manufacturing process markedly.

Also, a mold model is divided into a plurality of part data of a plurality of parts to match the physical properties required by the mold model. This will allow the changing of physical properties for the different regions of the mold, easily realize the performance of the mold and raise the performance of the mold. Also, the invention requires only the division of the mold model into a plurality of part data and shifting or correcting of shape of at least one of adjoining part data to be laid on the other part data by a predetermined amount of overlap. Hence, the mold manufacturing becomes very easy. And this shortens the time from the design of a mold to the completion of mold manufacturing by a layered manufacturing process, thus raising the productivity of mold production.

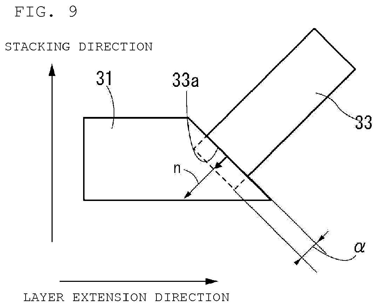

In the embodiment described above, it has been explained to the effect that the sipe part 33 is shifted by the part data correction processing means 22A so that the sipe part data of the sipe part 33 overlaps the tread part data of the tread part 31. However, the arrangement may be such that the sipe part data is corrected to change the shape of the sipe part 33 to have the division surface of the sipe part 33 cut into the tread part 31. That is, as shown in FIG. 9, the division surface 33a of the sipe part 33 may be extended in the normal direction set on the division surface 33a by the shift amount α.

Also, it has been explained that one of the mutually adjoining part data is corrected by the part data correction processing means 22A. However, a part shape data correction processing means may be provided in the design processing controller 20 to correct part shape data for the respective layers. In this arrangement, the model data outputted to the part data correction processing means 22A from the design means 21 is first converted into the part shape data of the respective part data by the manufacturing data conversion processing means 22B. Then at least one of the part shape data of the mutually adjoined parts within the same layer is corrected so as to obtain a predetermined amount of overlap.

Also, in the embodiment described above, the explanation has been given of an example of physical properties required for the jointing of the tread part 31 and the sipe part 33 of a tread die 11 as a three-dimensional object. However, to raise the strength of the sipe part 33, for instance, the part data of the sipe part 33 set with the above-mentioned overlap 37 may be set doubly. By so doing, it is possible to form the tread part 31, the overlap 37, and the sipe part 33 with different densities. That is, to obtain different physical properties in the regions other than the overlap 37, the part data on the desired region may be overlaid as it is or the part data with changed shape or dimensions may be overlaid on the original part data. Thus, it does not involve a complex processing of changing laser irradiation conditions as in the conventional method or does not require anticipation of defective jointing between part data. Using a simple method as described above, therefore, it is possible to set physical properties desired for the respective regions or optional positions of a three-dimensional object.

It is to be noted that the term "mold part" as used herein does not refer to a part different in shape appearance, but a difference of each region that requires different physical properties may be considered to be one of the mold parts. That is, in the foregoing embodiment, the tread die part for molding the tread surface of a tire is considered to be a part, but the tread die part may be considered to comprise a plurality of die parts. For example, the circumferential ends of the die may require certain strength to resist cracking or chipping from contact between dies, and the middle region between the ends thereof may require elasticity for absorbing strain when secured.

Also, in the foregoing embodiment, a description has been given that the metallic powder S for forming the mold as a three-dimensional object is sintered by laser irradiation. However, not only the ordinary laser beam, but also the LED light by an optical semiconductor of a semiconductor laser or the like may be irradiated. Any energy source including light for sintering powder suiting the nature of the powder may be used.

The embodiment as described above may be summarized as follows. As a method for manufacturing a three-dimensional object by a layered manufacturing process, the method includes converting model data of the three-dimensional object into slice data, sintering powder based on the slice data after the conversion, and stacking a plurality of sintered layers to form the three-dimensional object, The method further includes a part data correction step of correcting positional information of at least one of mutually adjoining part data of the model data of the three-dimensional object and laying the adjoining part data on each other by a predetermined amount of overlap. The model data corrected in the part data correction step is converted into slice data, and a sintered layer is formed based on the slice data corresponding to one part and then a sintered layer is formed based on the slice data corresponding to the other part. Thus, by this simple method of setting a predetermined amount of overlap, because the sintering is done with twice of light irradiation for sintering the powder, the mold can be manufactured integrally without leaving gaps between one part and the other part. At the same time, a strength required to assure the jointing of one part with the other part can be obtained. That is, it is possible to set physical properties, such as strength and thermal conductivity, required for the different regions of a three-dimensional object. And the light for sintering the above-mentioned powder includes not only the ordinary laser beam, but also the LED light by an optical semiconductor of a semiconductor laser or the like.

Also, as another method for manufacturing a three-dimensional object, in the part data correction step, shape information contained in at least one of the part data of mutually adjoining mold parts is and the adjoining part data are laid on each other by the predetermined amount of overlap. And the sintering is done with twice of light irradiation for sintering the powder in the part set for the predetermined amount of overlap. Accordingly, the mold can be manufactured integrally without leaving gaps between one part and the other part. At the same time, a strength required to assure the jointing of one mold part with the other mold part can be obtained. That is, it is possible to set physical properties, such as strength and thermal conductivity, required for the different regions of a three-dimensional object.

Also, as another method for manufacturing a three-dimensional object, a minimum value of the amount of overlap is set to a value whichever is larger of the half dimension of irradiation diameter of the light cast on the powder and a thickness of the sintered layer. Hence, the mutually adjoining parts can be joined together with certainty by a small correction.

Also, as still another method for manufacturing a three-dimensional object, an irradiation condition of the light to be cast on the powder is set for each of the part shape data. Therefore, it is possible to realize physical properties required for the parts constituting the three-dimensional object.

Also, in a three-dimensional object manufactured by a layered manufacturing process including converting model data of the three-dimensional into slice data, sintering powder based on the slice data after the conversion, and forming the three-dimensional object by stacking a plurality of sintered layers, positional information of at least one part data of the mutually adjoining part data of the model data of the three-dimensional object is corrected and the model data having a predetermined overlap region set for the adjoining part data are converted into slice data, and a sintered layer is formed based on the slice data corresponding to one part and then a sintered layer is formed based on the slice data corresponding to the other part, and physical properties of the overlap portion are different from those of the other regions of the mutually adjoining part data. Hence, it is possible to join the parts reliably and set the physical properties, such as strength and thermal conductivity, required for the different regions of the three-dimensional object by a simple method.

Also, as another three-dimensional object, since a density of the overlap region is higher than a density of the other regions of the mutually adjoining part data, the parts can securely be joined to each other.

### Description of Reference Numerals

- 30: mold model
- 31: tread part
- 32: groove part
- 33: sipe part
- 34: attachment part
- S: metallic powder
- La: laser light
- 61 to 63: sintered layer
- α: shift amount

## Claims

1. A method for manufacturing a tire curing mold by a layered manufacturing process comprising:
converting model data of the tire curing mold into slice data;
sintering powder based on the slice data after the conversion; and
stacking a plurality of sintered layers to form the tire curing mold,
wherein the method further comprises:
a part data correcting step of correcting positional information of sipe part data (D3) that adjoins tread part data (D1), the sipe part data (D3) and the tread part data (D1) being mutually adjoining part data of the model data of the tire curing mold, by allowing the entire sipe part data (D3) to move in a direction of the tread part data (D1) along a normal vector (n) of a division surface (33a) which is between the sipe part data (D3) and the tread part data (D1) and which is contained in the sipe part data (D3), and laying the adjoining part data on each other by an amount of overlap (α) whichever is larger of the dimension of the irradiation diameter (R) of light cast on the powder and twice the dimension of the thickness (δh) in the stacking direction of a sintered layer set by shifting the sipe part data (D3) along the normal vector of the division surface (33a), and
wherein the model data corrected in the part data correction step is converted into slice data of sipe part data (D3) and tread part data (D1) that are mutually adjoining with the division surface (33a) of the sipe part data (D3) assuming a staircase pattern and a division surface (31a) which is between the sipe part data (D3) and the tread part data (D1) and which is contained in the tread part data (D1) assuming a staircase pattern, and a sintered layer is formed based on the slice data corresponding to one of the sipe part data (D3) and the tread part data (D1) including the overlap (37) and then a sintered layer is formed based on the slice data corresponding to the other of the sipe part data (D3) and the tread part data (D1) including the overlap (37), so that the overlap (37) is subjected to irradiation twice and the sintered density of the overlap (37) becomes higher than the sintered density of the parts of the tread part data (D1) other than the overlap (37) and the sintered density of the parts of the sipe part data (D3) other than the overlap (37).

2. The method for manufacturing a tire curing mold according to claim 1, wherein, in the part data correction step, shape information contained in at least one of the sipe part data (D3) and the tread part data (D1) of the model data of the tire curing mold is corrected and the adjoining part data are laid on each other by the amount of overlap (α).

3. The method for manufacturing a tire curing mold according to claim 1 or claim 2, wherein an irradiation condition of light to be cast on the powder is set for each of part shape data.

4. A tire curing mold manufactured by a layered manufacturing process comprising converting model data of a tire curing mold into slice data, sintering powder based on the slice data after the conversion, and forming the tire curing mold by stacking a plurality of sintered layers,
wherein positional information of sipe part data (D3) that adjoins tread part data (D1), the sipe part data (D3) and the tread part data (D1) being mutually adjoining part data of the model data of the tire curing mold, is corrected by allowing the entire sipe part data (D3) to move in a direction of the tread part data (D1) along a normal vector (n) of a division surface (33a) which is between the sipe part data (D3) and the tread part data (D1) and which is contained in the sipe part data (D3), and the model data having an overlap region (37), whichever is larger of the dimension of the irradiation diameter (R) of light cast on the powder and twice the dimension of the thickness (δh) in the stacking direction of a sintered layer, which is set by shifting the sipe part data (D3) along the normal vector of the division surface (33a), and which is set for the adjoining part data, are converted into slice data of sipe part data (D3) and tread part data (D1) that are mutually adjoining with the division surface (33a) of the sipe part data (D3) assuming a staircase pattern and a division surface (31a) which is between the sipe part data (D3) and the tread part data (D1) and which is contained in the tread part data (D1) assuming a staircase pattern, and a sintered layer is formed based on the slice data corresponding to one of the sipe part data (D3) and the tread part data (D1) including the overlap region (37) and then a sintered layer is formed based on the slice data corresponding to the other of the sipe part data (D3) and the tread part data (D1) including the overlap region (37), so that overlap region (37) is subjected to irradiation twice and the sintered density of the overlap region (37) becomes higher than the sintered density of the parts of the tread part data (D1) other than the overlap region (37) and the sintered density of the parts of the sipe part data (D3) other than the overlap region (37) .

5. The method for manufacturing a tire curing mold according to claim 1, wherein in the part data correction step, positions of both the division surfaces (31a, 33a) of the parts to be joined together are so corrected that they cut into each other to form the overlap region (37).

6. The method for manufacturing a tire curing mold according to claim 1, wherein the method comprises setting for the tread part data (D1) laser irradiation conditions to achieve a predetermined thermal conductivity of a tread part (31) manufactured based on tread part data (D1) other than that of the overlap region (37), and setting for the sipe part data (D3) laser irradiation conditions different from those for the tread data part (D1) to achieve not only predetermined thermal conductivity but also predetermined strength of a sipe part (33) manufactured based on sipe part data (D3) other than that of the overlap region (37).

7. The method for manufacturing a tire curing mold according to claim 1, wherein for the laser irradiation conditions, a laser strength, scanning speed and direction of laser light, and a laser irradiation diameter (R) are set to be constant.

## Patentansprüche

1. Verfahren zur Herstellung einer Reifenaushärteform durch ein geschichtetes Herstellungsverfahren, Folgendes beinhaltend:
Umwandeln von Modelldaten der Reifenaushärteform in Schichtdaten;
Sintern von Pulver basierend auf den Schichtdaten nach der Umwandlung; und
Stapeln einer Vielzahl von gesinterten Schichten zum Bilden der Reifenaushärteform,
wobei das Verfahren zudem Folgendes beinhaltet:
einen Teiledatenkorrekturschritt des Korrigierens von Positionsinformationen von Lamellenteiledaten (D3), welche an Laufflächenteiledaten (D1 angrenzen, wobei die Lamellenteiledaten (D3) und die Laufflächenteiledaten (D1) beide aneinander grenzende Teiledaten der Modelldaten der Reifenaushärteform sind, durch Versetzen der gesamten Lamellenteiledaten (D3) in die Lage, sich in eine Richtung der Laufflächenteiledaten (D1) entlang eines Normalvektors (n) einer Teilungsoberfläche (33a) zu bewegen, welche zwischen den Lamellenteiledaten (D3) und den Laufflächenteiledaten (D1) liegt und welche in den Lamellenteiledaten (D3) enthalten ist, und Aneinanderlegen der angrenzenden Teiledaten um eine jeweils größere Überlappungsmenge (α) von der Abmessung des Bestrahlungsdurchmessers (R) von Licht, das auf das Pulver geworfen wird, und dem Doppelten der Dickenabmessung (δh) in der Stapelrichtung einer gesinterten Schicht, welche durch Versetzen der Lamellenteiledaten (D3) entlang des Normalvektors der Teilungsoberfläche (33a) festgelegt wird, und
wobei die in dem Teiledatenkorrekturschritt korrigierten Modelldaten in Schichtdaten der Lamellenteiledaten (D3) und der Laufflächenteiledaten (D1) umgewandelt werden, welche beide an die Teilungsoberfläche (33a) der Lamellenteiledaten (D3) angrenzen, welche ein Treppenhausmuster annimmt und eine Teilungsoberfläche (31a), welche zwischen den Lamellenteiledaten (D3) und den Laufflächenteiledaten (D1) liegt, und welche in den Laufflächenteiledaten (D1) enthalten ist, welche ein Treppenhausmuster annimmt, und eine gesinterte Schicht basierend auf den Schichtdaten gebildet wird, welche einem von den Lamellenteiledaten (D3) und den Laufflächenteiledaten (D1), umfassend die Überlappung (37), entsprechen, und dann eine gesinterte Schicht gebildet wird, basierend auf den Schichtdaten, welche dem anderen von den Lamellenteiledaten (D3) und den Laufflächenteiledaten (D1), umfassend die Überlappung (37), entsprechen, so dass die Überlappung (37) zweimal einer Bestrahlung ausgesetzt wird und die gesinterte Dichte der Überlappung (37) höher als die gesinterte Dichte der Teile der Laufflächenteiledaten (D1) außerhalb der Überlappung (37) und als die gesinterte Dichte der Teile der Lamellenteiledaten (D3) außerhalb der Überlappung (37) wird.

2. Verfahren zur Herstellung einer Reifenaushärteform nach Anspruch 1, wobei, in dem Teiledatenkorrekturschritt, in mindestens einem von den Lamellenteiledaten (D3) und den Laufflächenteiledaten (D1) der Modelldaten der Reifenaushärteform enthaltene Forminformationen korrigiert werden und die angrenzenden Teiledaten um die Überlappungsmenge (α) aneinander gelegt werden.

3. Verfahren zur Herstellung einer Reifenaushärteform nach Anspruch 1 oder 2, wobei eine Bestrahlungsbedingung von auf das Pulver zu werfendem Licht für jede der Teileformdaten festgelegt ist.

4. Reifenaushärteform, hergestellt durch ein geschichtetes Herstellungsverfahren, beinhaltend Umwandeln von Modelldaten einer Reifenaushärteform in Schichtdaten, Sintern von Pulver basierend auf den Schichtdaten nach der Umwandlung, und Bilden der Reifenaushärteform durch Stapeln einer Vielzahl von gesinterten Schichten,
wobei Positionsinformationen von Lamellenteiledaten (D3), welche an Laufflächenteiledaten (D1) angrenzen, wobei die Lamellenteiledaten (D3) und die Laufflächenteiledaten (D1) beide aneinander grenzende Teiledaten der Modelldaten der Reifenaushärteform sind, dadurch korrigiert werden, dass die gesamten Lamellenteiledaten (D3) in die Lage versetzt werden, sich in eine Richtung der Laufflächenteiledaten (D1) entlang eines Normalvektors (n) einer Teilungsoberfläche (33a) zu bewegen, welche zwischen den Lamellenteiledaten (D3) und den Laufflächenteiledaten (D1) liegt und welche in den Lamellenteiledaten (D3) enthalten ist, und wobei die Modelldaten einen Überlappungsbereich (37) besitzen, welcher das jeweils größere von der Abmessung des Bestrahlungsdurchmessers (R) von Licht, das auf das Pulver geworfen wird, und von dem Doppelten der Dickenabmessung (δh) in der Stapelrichtung einer gesinterten Schicht ist, welche durch Versetzen der Lamellenteiledaten (D3) entlang des Normalvektors der Teilungsoberfläche (33a) festgelegt wird, und welche für die angrenzenden Teiledaten festgelegt ist, in Schichtdaten der Lamellenteiledaten (D3) und der Laufflächenteiledaten (D1) umgewandelt werden, welche beide an die Teilungsoberfläche (33a) der Lamellenteiledaten (D3) angrenzen, welche ein Treppenhausmuster annimmt und eine Teilungsoberfläche (31a), welche zwischen den Lamellenteiledaten (D3) und den Laufflächenteiledaten (D1) liegt, und welche in den Laufflächenteiledaten (D1) enthalten ist, welche ein Treppenhausmuster annimmt, und danach eine gesinterte Schicht basierend auf den Schichtdaten gebildet wird, welche einem von den Lamellenteiledaten (D3) und den Laufflächenteiledaten (D1), umfassend die Überlappung (37), entsprechen und danach eine gesinterte Schicht gebildet wird, basierend auf den Schichtdaten, welche dem anderen von den Lamellenteiledaten (D3) und den Laufflächenteiledaten (D1), umfassend Überlappung (37), entsprechen, so dass die Überlappung (37) zweimal einer Bestrahlung ausgesetzt wird und die gesinterte Dichte der Überlappung (37) höher als die gesinterte Dichte der Teile der Laufflächenteiledaten (D1) außerhalb der Überlappung (37) und als die gesinterte Dichte der Teile der Lamellenteiledaten (D3) außerhalb der Überlappung (37) wird.

5. Verfahren zur Herstellung einer Reifenaushärteform nach Anspruch 1, wobei in dem Teiledatenkorrekturschritt Positionen beider Teilungsoberflächen (31a, 33a) der zusammenzufügenden Teile so korrigiert werden, dass sie ineinander schneiden, um den Überlappungsbereich (37) zu bilden.

6. Verfahren zur Herstellung einer Reifenaushärteform nach Anspruch 1, wobei das Verfahren Festlegen, für die Laufflächenteiledaten (D1), von Laserbestrahlungsbedingungen beinhaltet, um eine vorbestimmte thermische Leitfähigkeit eines auf Laufflächenteiledaten (D1) basierend hergestellten Laufflächenteils (31) außerhalb derjenigen des Überlappungsbereichs (37) zu erzielen, und Festlegen, für die Lamellenteiledaten (D3), von Laserbestrahlungsbedingungen, welche sich von denjenigen der Laufflächenteiledaten (D1) unterscheiden, um nicht nur eine vorbestimmte thermische Leitfähigkeit sondern ebenfalls eine vorbestimmte Festigkeit eines Lamellenteils (33) zu erzielen, welches basierend auf Lamellenteiledaten (D3) außerhalb derjenigen des Überlappungsbereichs (37) hergestellt wird.

7. Verfahren zur Herstellung einer Reifenaushärteform nach Anspruch 1, wobei, für die Laserbestrahlungsbedingungen, eine Laserstärke, eine Laserabtastgeschwindigkeit und eine Richtung des Laserlichts und ein Bestrahlungsdurchmesser (R) als konstant festgelegt werden.

## Revendications

1. Procédé de fabrication d'un moule de durcissement d'un bandage pneumatique par un processus de fabrication en couches, comprenant les étapes de :
conversion de données de modèle du moule de durcissement du bandage pneumatique en des données de tranche ;
frittage de poudre sur la base des données de tranche après la conversion ; et
empilage d'une pluralité de couches frittées pour former le moule de durcissement du bandage pneumatique ;
dans lequel le procédé comprend en outre :
une étape de correction de données de parties, consistant à corriger des informations de position de données de partie de lamelle (D3) adjacentes aux données de partie de bande de roulement (D1), les données de partie de lamelle (D3) et les données de partie de bande de roulement (D1) étant mutuellement adjacentes aux données de parties des données de modèle du moule de durcissement du bandage pneumatique, en permettant le déplacement des données de l'ensemble de la partie de lamelle (D3) dans une direction des données de partie de bande de roulement (D1) le long d'un vecteur normal (n) d'une surface de division (33a) située entre les données de partie de lamelle (D3) et les données de partie de bande de roulement (D1) et contenue dans les données de partie de lamelle (D3), et superposition des données de parties adjacentes par une quantité de chevauchement (α) la plus grande parmi la dimension du diamètre d'irradiation (R) de la lumière projetée sur la poudre et le double de l'épaisseur (δh) dans la direction d'empilage d'une couche frittée fixée en déplaçant les données de la partie de lamelle (D3) le long du vecteur normal de la surface de division (33a) ; et
dans lequel les données de modèle corrigées pendant l'étape de correction des données de parties sont converties en données de tranche des données de partie de lamelle (D3) et des données de partie de bande de roulement (D1), mutuellement adjacentes à la surface de division (33a) des données de partie de lamelle (D3), en supposant un motif en escalier et une surface de division (31a) située entre les données de partie de lamelle (D3) et les données de partie de bande de roulement (D1) et contenue dans les données de partie de bande de roulement (D1), en supposant un motif en escalier, et une couche frittée étant formée sur la base des données de tranche correspondant à l'une parmi les données de partie de lamelle (D3) et les données de partie de bande de roulement (D1), incluant le chevauchement (37), et une couche frittée étant ensuite formée sur la base des données de tranche correspondant à l'autre des données de partie de lamelle (D3) et des données de partie de bande de roulement (D1), incluant le chevauchement (37), de sorte que le chevauchement (37) est soumis à deux reprises à une irradiation, et la densité frittée du chevauchement (37) devenant ainsi supérieure à la densité frittée des parties des données de partie de bande de roulement (D1), autres que le chevauchement (37), et à la densité frittée des parties des données de partie de lamelle (D3) autres que le chevauchement (37).

2. Procédé de fabrication d'un moule de durcissement d'un bandage pneumatique selon la revendication 1, dans lequel, lors de l'étape de correction des données de parties, les informations contenues dans au moins l'une parmi les données de partie de lamelle (D3) et les données de partie de bande de roulement (D1) des données de modèle du moule de durcissement du bandage pneumatique sont corrigées, et les données de parties adjacentes sont superposées par la quantité de chevauchement (α).

3. Procédé de fabrication d'un moule de durcissement d'un bandage pneumatique selon les revendications 1 ou 2, dans lequel une condition d'irradiation de la lumière devant être projetée sur la poudre est établie pour chacune des données de forme de parties.

4. Moule de durcissement d'un bandage pneumatique fabriqué par un processus de fabrication en couches, comprenant la conversion de données de modèle d'un moule de durcissement du bandage pneumatique en données de tranche, le frittage de poudre sur la base des données de tranche après la conversion et la formation du moule de durcissement du bandage pneumatique en empilant une pluralité de couches frittées ;
dans lequel les informations de position des données de partie de lamelle (D3) adjacentes aux données de partie de bande de roulement (D1), les données de partie de lamelle (D3) et les données de partie de bande de roulement (D1) étant mutuellement adjacentes aux données de parties des données de modèle du moule de durcissement du bandage pneumatique, sont corrigées en permettant le déplacement des données de l'ensemble de la partie de lamelle (D3) dans une direction des données de partie de bande de roulement (D1) le long d'un vecteur normal (n) d'une surface de division (33a) située entre les données de partie de lamelle (D3) et les données de partie de bande de roulement (D1) et contenue dans les données de partie de lamelle (D3), et les données de modèle comportant une région de chevauchement (37) la plus grande parmi la dimension du diamètre d'irradiation (R) de la lumière projetée sur la poudre et le double de la dimension de l'épaisseur (δh) dans la direction de l'empilage d'une couche frittée, fixée en déplaçant les données de partie de lamelle (D3) le long du vecteur normal de la surface de division (33a), et fixée pour les données de parties adjacentes, sont converties en données de tranche des données de partie de lamelle (D3) et des données de partie de bande de roulement (D1), mutuellement adjacentes à la surface de division (33a) des données de partie de lamelle (D3), en supposant un motif en escalier, et une surface de division (31a) située entre les données de partie de lamelle (D3) et les données de partie de bande de roulement (D1) et contenue dans les données de partie de bande de roulement (D1), en supposant un motif en escalier, et une couche frittée étant ensuite formée sur la base des données de tranche correspondant à l'une des données de partie de lamelle (D3) et des données de partie de bande de roulement (D1), incluant la région de chevauchement (37), et une couche frittée étant ensuite formée sur la base des données de tranche correspondant à l'autre des données de partie de lamelle (D3) ou des données de partie de bande de roulement (D1), incluant la région de chevauchement (37), de sorte que la région de chevauchement (37) est soumise à deux reprises à une irradiation, et la densité frittée de la région de chevauchement (37) devenant ainsi supérieure à la densité frittée des parties des données de partie de bande de roulement (D1), autres que la région de chevauchement, (37) et à la densité frittée des parties des données de partie de lamelle (D3) autres que la région de chevauchement (37).

5. Procédé de fabrication d'un moule de durcissement d'un bandage pneumatique selon la revendication 1, dans lequel, au cours de l'étape de correction des données de parties, les positions des deux surfaces de division (31a, 33a) des parties devant être reliées sont corrigées de sorte qu'elles se coupent pour former la région de chevauchement (37).

6. Procédé de fabrication d'un moule de durcissement d'un bandage pneumatique selon la revendication 1, dans lequel le procédé comprend les étapes d'établissement de conditions d'irradiation au laser pour les données de partie de bande de roulement (D1) pour atteindre une conductivité thermique prédéterminée d'une partie de bande de roulement (31) fabriquée sur la base des données de partie de bande de roulement (D1) autres que celles de la région de chevauchement (37), et d'établissement de conditions d'irradiation au laser pour les données de partie de lamelle (D3) différentes de celles des données de partie de bande de roulement (D1), pour atteindre non seulement une conductivité thermique prédéterminée, mais aussi une résistance prédéterminée d'une partie de lamelle (33) fabriquée sur la base des données de partie de lamelle (D3) autres que celles de la région de chevauchement (37).

7. Procédé de fabrication d'un moule de durcissement d'un bandage pneumatique selon la revendication 1, dans lequel, en ce qui concerne les conditions d'irradiation au laser, une force du laser, une vitesse de balayage et une direction de la lumière laser et un diamètre d'irradiation du laser (R) sont établies de sorte à être constantes.
